# EUROPÄISCHE PATENTSCHRIFT

(11) **EP 2 487 329 B1**
(45) Veröffentlichungstag und Bekanntmachung des Hinweises auf die Patenterteilung: **27.11.2013**
(21) Anmeldenummer: 11153627.2
(22) Anmeldetag: 08.02.2011
(51) Int. Cl.: F01D 5/14

(54) **Schaufelkanal mit Seitenwandkonturierung und zugehörige Strömungsmaschine**
Blade canal with side wall contours and corresponding fluid flow engine
Canal d'aube doté d'une définition de contour de la paroi latérale et turbomachine associé

(43) Veröffentlichungstag der Anmeldung: 15.08.2012
(73) Patentinhaber: MTU Aero Engines AG, 80995 München (DE)
(72) Erfinder: Mahle, Inga, Dr., 81669 München (DE); Niebler, Michaela, 81373 München (DE)

(56) Entgegenhaltungen:
- EP-A1- 2 458 148
- EP-A2- 2 204 535
- GB-A- 944 166
- US-A1- 2007 258 818

## Beschreibung

Die Erfindung betrifft einen Schaufelkanal mit Seitenwandkonturierung in einer Strömungsmaschine nach dem Oberbegriff des Patentanspruchs 1 und eine Strömungsmaschine mit derartigen Schaufelkanälen.

Eine durch einen Strömungskanal geführte Fluidströmung wird durch einen seitlichen Druckgradienten parallel zur Seitenwandung abgelenkt. Da wandnahe Strömungsschichten aufgrund ihrer geringeren Geschwindigkeit stärker als wandferne Strömungsschichten abgelenkt werden, wird eine Sekundärströmung gebildet, die einer Hauptströmung überlagert ist, was unter anderem zu Druckverlusten führt. Derartige Sekundärströmungen treten regelmäßig in Schaufelgittern von Strömungsmaschinen wie Gas- und Dampfturbinen auf. Die Schaufelgitter bestehen aus einer Vielzahl von in Umfangsrichtung nebeneinander angeordneten Schaufeln bzw. Schaufelblättern, die in einem rotationssymmetrischen Strömungskanal angeordnet sind und zwischen denen jeweils ein Schaufelkanal ausgebildet ist, in dem die Sekundärströmungen beim Durchströmen des Fluids ausgebildet werden. Die Schaufelkanäle sind in Radialrichtung jeweils von einer radial äußeren gehäuseseitigen Seitenwandung bzw. äußeren Begrenzungswand und von einer radial inneren nabenseitigen Seitenwandung bzw. inneren Begrenzungswand begrenzt. Gebildet werden die Begrenzungswände durch einen feststehenden Gehäuseabschnitt, durch einen Rotorabschnitt, durch radial innere Schaufeldeckplatten und/oder durch radial äußere Schaufeldeckplatten. In Umfangsrichtung sind die Schaufelkanäle jeweils durch eine druckseitige und eine saugseitige Schaufelblattwandung begrenzt. Zur Verringerung der Sekundärströmungen bzw. Kanalwirbel werden in die Seitenwandungen häufig Konturierungen in Form von Erhebungen und/oder Vertiefungen zur Strömungsbeeinflussung eingebracht.

Aus dem Stand der Technik ist eine Vielzahl von Seitenwandkonturierungen bekannt. So wird z.B. in der WO 2010/068391 A2, EP 1681438 A2 und in der EP 1712 737 A1 vorgeschlagen, eine Erhebung auf der Schaufeldruckseite und eine Vertiefung auf der Schaufelsaugseite vorzusehen. In der EP 1 955 410 A1 und in der EP 2 136 033 A1 wird hingegen vorgeschlagen, sowohl druck- als auch saugseitig jeweils eine Erhebung anzuordnen. Die Seitenwandkonturierung der EP 1 762 700 A2 sieht vor, jeweils zwei druckseitige Erhebungen. und eine sich in Umfangsrichtung zwischen den Erhebungen erstreckende Vertiefung vorzusehen. Die Seitenwandkonturierung der WO 2009/112776 A2 sieht vor, saug- und druckseitig jeweils eine Vertiefung und eine Erhebung vorzusehen. Diese bekannten Seitenwandkonturierungen führen zwar zu einer Reduzierung der Sekundärströmungen, weisen jedoch noch ein erhebliches Verbesserungspotential auf. Weiterer Stand der Technik ist in den Druckschriften GB 944166 A, US 2007/258818 A1, EP 2 204 535 A2 und in der EP 2 458 148 A1 gezeigt.

Aufgabe der Erfindung ist es, einen Schaufelkanal mit einer Seitenwandkonturierung in einer Strömungsmaschine mit einer reduzierten Sekundärströmung zu schaffen, sowie eine Strömungsmaschine mit einem verbesserten Wirkungsgrad zu schaffen.

Diese Aufgabe wird gelöst durch einen Schaufelkanal mit einer Seitenwandkonturierung in einer Strömungsmaschine mit den Merkmalen des Patentanspruchs 1 und durch eine Strömungsmaschine mit den Merkmalen des Patentanspruchs 11.

Ein erfindungsgemäßer Schaufelkanal mit einer Seitenwandkonturierung in einer Strömungsmaschine ist in Umfangsrichtung von einer druckseitigen Wandung eines ersten Schaufelblattes und von einer gegenüberliegenden saugseitigen Wandung eines benachbarten zweiten Schaufelblattes begrenzt. In Radialrichtung ist der Schaufelkanal von zwei gegenüberliegenden Begrenzungswänden begrenzt, wobei zumindest eine der Begrenzungswände im Bereich der druckseitigen Schaufelblattwandung mit zumindest einer druckseitigen Erhebung versehen ist Erfindungsgemäß sind an der erhebungsseitigen Begrenzungswand im Bereich der saugseitigen Schaufelblattwandung zumindest zwei saugseitige Vertiefungen und zumindest eine saugseitige Erhebung vorgesehen, wobei in Strömungsrichtung betrachtet die saugseitige Erhebung zwischen den Vertiefungen angeordnet ist. Aufgrund der erfindungsgemäßen nicht axial-symmetrischen Seitenwandkonturierung wird ein statische Druckfeld an der zumindest einen Begrenzungswand und an den Schaufelblattwandungen im Randbereich so beeinflusst, dass eine Sekundärströmung reduziert wird, wodurch sich Strömungsverluste verringern und eine Zuströmung auf ein stromab liegendes Schaufelgitter verbessert wird. Die Erhebungen und Vertiefungen sind lokal ausgebildet und voneinander beabstandet. Hierdurch werden nicht konturierte Begrenzungswandabschnitte zwischen den Erhebungen und Vertiefungen gebildet, was sich positiv auf den Strömungsverlauf auswirkt.

Insbesondere können die Erhebungen in Umfangsrichtung betrachtet zumindest in etwa gegenüberliegend angeordnet sein, so dass im Prinzip zwischen den Erhebungen ein querschnittsverjüngter Schaufelkanalabschnitt gebildet wird.

Die Erhebungen und Vertiefungen weisen jeweils einen höchsten bzw. einen tiefsten Abschnitt auf, der bevorzugterweise von den Schaufelblattwandungen beabstandet ist. Der jeweilige Abschnitt kann jedoch auch unmittelbar an der betreffenden Schaufelblattwandungen angrenzen. Es wird jedoch bevorzugt, wenn die höchsten Abschnitte und die tiefsten Abschnitte stromabwärts vor einem schaufelblattseitigen Transitionspunkt angeordnet sind.

Bei einem bevorzugten Ausführungsbeispiel berührt die druckseitige Erhebung die druckseitige Schaufelblattwandung und erstreckt sich entlang dieser stromaufwärts zur bzw. bis in einen Bereich einer Vorderkante des ersten Schaufelblattes. Dabei ist es insbesondere vorteilhaft, wenn die vordere Vertiefung die saugseitige Schaufelblattwandung berührt und sich stromaufwärts über eine Vorderkante des zweiten Schaufelblattes hinaus erstreckt.

Bei einem alternativen bevorzugten Ausführungsbeispiel berührt die druckseitige Erhebung die druckseitige Schaufelblattwandung und erstreckt sich stromaufwärts über die Vorderkante des ersten Schaufelblattes hinaus. Hierbei ist es vorteilhaft, wenn die vordere Vertiefung stromaufwärts vor der Vorderkante des zweiten Schaufelblattes angeordnet und somit von dieser beabstandet ist. Dabei lässt sich die Wirkung dieser Seitenwandkonturierung verbessern, wenn die hintere Vertiefung mit einem Bereich zwischen den Erhebungen angeordnet ist. Zudem ist es bei diesem Ausführungsbeispiel vorteilhaft, wenn die druckseitige Erhebung und die Vertiefungen mit ihren Längsachsen im Wesentlichen in Strömungsrichtung orientiert sind.

Bei beiden bevorzugten Ausführungsbeispielen wird es bevorzugt, wenn die saugseitige Erhebung und die hintere Vertiefung die saugseitige Schaufelblattwandung berühren.

Eine erfindungsgemäße Strömungsmaschine hat zumindest ein Schaufelgitter mit einer Vielzahl von erfindungsgemäßen Schaufelkanälen. Aufgrund der reduzierten Sekundärströmungen bzw. Kanalwirbel zeichnet sich eine derartige Strömungsmaschine durch einen verbesserten Wirkungsgrad aus.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine Draufsicht auf einen abgewickelten und geschnittenen Schaufelgitterabschnitt eines ersten erfindungsgemäßen Ausführungsbeispiels, und
- Figur 2: eine Draufsicht auf einen abgewickelten und geschnittenen Schaufelgitterabschnitt eines zweiten erfindungsgemäßen Ausführungsbeispiels.

Die beiden Ausführungsbeispiele werden anhand jeweils eines Schaufelgitters einer axialen Niederdruckturbine erläutert. Die Erfindung findet jedoch auch Anwendung bei Verdichterreihen oder Turbinenreihen in Radial- und Diagonalbauweise.

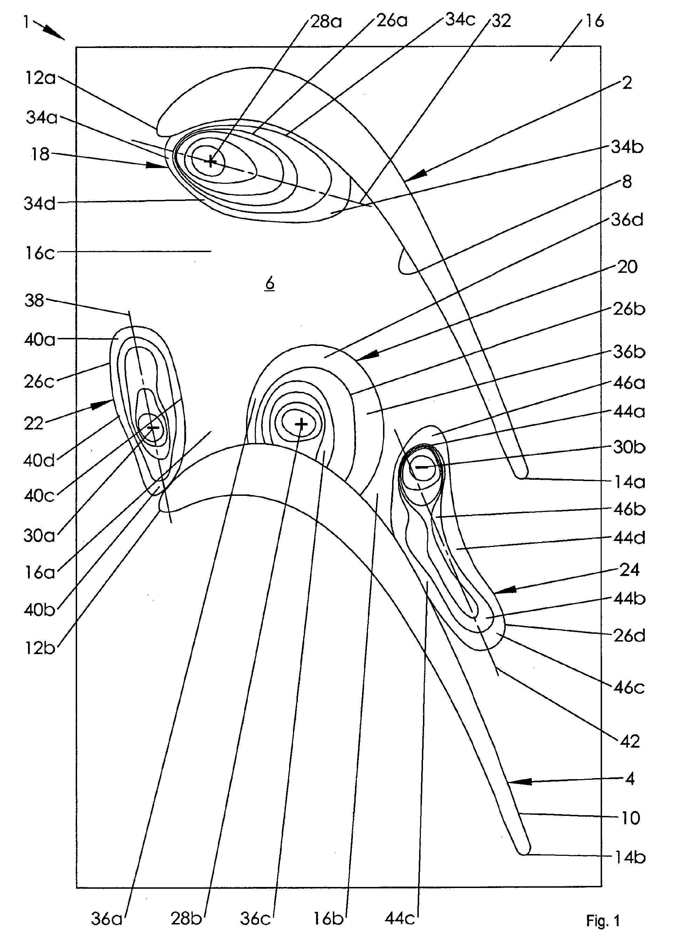

Figur 1 zeigt eine Draufsicht auf eine Schnittdarstellung eines in einer Ebene abgewickelten Umfangsabschnittes eines ersten erfindungsgemäßen niederdruckturbinenseitigen Schaufelgitters 1 einer axialen Strömungsmaschine wie eine stationäre Gasturbine oder ein Flugzeugtriebwerk.

Das Schaufelgitter 1 hat eine Vielzahl von Schaufelblättern 2, 4, die in Umfangsrichtung nebeneinander angeordnet sind und jeweils einen Schaufelkanal 6 begrenzen, in dem eine Hauptströmung ausgebildet wird. In Umfangsrichtung wird der Schaufelkanal 6 von einer druckseitigen Wandung 8 des ersten Schaufelblattes 2 und von einer gegenüberliegenden saugseitigen Wandung 10 des zweiten Schaufelblattes 4 gebildet, die sich jeweils zwischen einer Vorderkante 12a, 12b und einer Hinterkante 14a, 14b der Schaufelblätter 2, 4 erstrecken. In Radialrichtung wird der Schaufelkanal 6 von einer nabenseitigen Seitwandung bzw. inneren Begrenzungswand 16 begrenzt. Zudem wird der Schaufelkanal 6 in Radialrichtung von einer nicht dargestellten gehäuseseitigen Seitwandung bzw. äußeren Begrenzungswand begrenzt, die aufgrund der Schnittansicht nicht dargestellt ist. Die innere Begrenzungswand 16 wird beispielsweise von einem Rotorabschnitt oder einer schaufelfußseitigen Plattform bzw. einem inneren Deckband gebildet. Die äußere nicht dargestellte Begrenzungswand wird beispielsweise von einem Gehäuseabschnitt oder einem schaufelblattspitzenseitigen äußeren Deckband gebildet und kann analaog zur inneren Begrenzungswand 16 gestaltet sein.

Zumindest die innere Begrenzungswand 16 ist im Bereich des Schaufelkanals 6 mit einer nicht axial-symmetrischen Seitenwandkonturierung in Form einer druckseitigen Erhebung 18, einer saugseitigen Erhebung 20 sowie einer saugseitigen in Strömungsrichtung betrachtet vorderen Vertiefung 22 und einer stromabwärts der saugseitigen Erhebung 20 angeordneten saugseitigen hinteren Vertiefung 24 versehen. Die Einzelkonturierungen 18, 20, 22, 24 können jedoch auch nur im Bereich der gehäuseseitigen äußeren Begrenzungswand oder im Bereich von beiden Begrenzungswänden vorgesehen sein. Sie sind zeichnerisch durch eine Vielzahl von Höhen- bzw. Tiefenlinien 26a bis 26d mit einem Pluszeichen als höchsten Abschnitt 28a, 28b oder einem Minuszeichen als tiefsten Abschnitt 30a, 30b dargestellt. Die Abschnitte 28a, 28b und 30a, 30b können dabei einheitliche Höhen und Tiefen oder unterschiedliche Höhen und Tiefen haben. Die Einzelkonturierungen 18, 20, 22, 24 weisen unterschiedliche Geometrien auf und sind vor einem saugseitigen nicht bezifferten Transitionspunkt angeordnet. Sie sind jeweils voneinander beabstandet, so dass zwischen den saugseitigen Einzelkonturierungen 20, 22, 24 sowie zwischen den saugseitigen Einzelkonturierungen 20, 22, 24 und der druckseitigen Einzelkonturierung 18 jeweils ein dem ursprünglichen Verlauf der Begrenzungswand 16 verlaufender Flächenabschnitt 16a, 16b, 16c geschaffen ist.

Die druckseitige Erhebung 18 hat einen ovalen bzw. linsenförmigen Grundquerschnitt und ist mit ihrer Längsachse 32 in etwa in Richtung der Hauptströmung orientiert. Sie ist in Strömungsrichtung hinter der Vorderkante 12a des ersten Schaufelblattes 2 positioniert und mit ihrem höchsten Abschnitt 28a, der in einem vorderen Erhebungsbereich angeordnet ist, von der Schaufelblattwandung 8 beabstandet. Hierdurch wird in Strömungsrichtung betrachtet eine steil ansteigende Stirnflanke 34a und eine flach abfallende hintere Flanke 34b gebildet. Ihre Seitenflanken 34c, 34d sind identisch bzw. nahezu identisch ausgebildet, so dass die Erhebung 18 quasi spiegelsymmetrisch zur Längsachse 32 ausgeführt ist. Dabei berührt sie mit einem fußseitigen Abschnitt der Seitenflanke 34c die druckseitigen Schaufelblattwandung 8 derart, dass zwischen der Seitenflanke 34c und der Schaufelblattwandung 8 ein nicht bezifferter Strömungskanalabschnitt gebildet ist.

Die saugseitige Erhebung 20 ist im Bereich der zweiten Schaufel 4 gegenüber der druckseitigen Erhebung 18 angeordnet, so dass im Bereich der inneren Begrenzungswand 16 zwischen den Erhebungen 18, 20 ein nicht bezifferter querschnittsverjüngter Schaufelkanalabschnitt geschaffen ist. Sie hat im Vergleich zur druckseitigen Erhebung 18 einen kreisförmigen Grundquerschnitt mit einem von der Schaufelblattwandung 10 beabstandeten in etwa mittig positionierten höchsten Abschnitt 28b. Ihre Grundfläche entspricht in etwa der Grundfläche der druckseitigen Erhebung 18. Sie hat eine in etwa kegelförmige Geometrie mit einem steil ansteigenden stirnseitigen Umfangsflankenabschnitt 36a und einem flach abfallenden hinteren Umfangsflankenabschnitt 36b. Sie berührt mit einem fußseitigen Umfangsflankenabschnitt 36c die saugseitige Schaufelblattwandung 10 derart, dass dieser entsprechend der Schaufelblattwandung 10 konvex ausgebildet ist, wobei zwischen dem Umfangsflankenabschnitt 36c und der Schaufelblattwandung 10 ein nicht bezifferter Strömungskanalabschnitt gebildet ist. Ein von der Seitenwandung 10 abgewandter und sich zwischen dem stirnseitigen Umfangsflankenabschnitt 36a und dem hinteren Umfangsflankenabschnitt 36b erstreckender Umfangsflankenabschnitt 36d ist entsprechend diesen Umfangsflankenabschnitten 36a, 36b konkav ausgebildet.

Die vordere Vertiefung 22 ist im Bereich der Vorderkante 12b des zweiten Schaufelblattes 4 in die innere Begrenzungswand 16 eingebracht. Sie hat einen ovalen Öffnungsquerschnitt mit einer Öffnungsfläche, die kleiner als die Grundfläche der druckseitigen Erhebung 18 ist. Sie ist mit ihrer Längsache 38 nahezu orthogonal zur Schaufelblattwandung 10 und somit im Wesentlichen quer zur Hauptströmung orientiert. Sie ist mit ihrer abfallenden Stirnflanke 40a von der saugseitigen Seitenwandung 10 beabstandet und berührt diese mit einem öffnungsseitigen Abschnitt ihrer hinteren Flanke 40b. Sie ragt somit quer in den Schaufelkanal 6 hinein, wobei ihr tiefster Abschnitt 30a in einem mittleren Vertiefungsbereich angeordnet und etwa in Richtung der Schaufelblattwandung 10 versetzt ist. Somit ist ihre abfallende Stirnflanke 40a flacher als ihre ansteigende hintere Flanke 40b ausgebildet. Ihre Seitenflanken 40b, 40c sind nahezu identisch ausgebildet, so dass die vordere Vertiefung 22 quasi spiegelsymmetrisch zu ihrer Längsachse 38 ausgeführt ist.

Die hintere Vertiefung 24 ist stromabwärts der saugseitigen Erhebung 20 im Bereich des zweiten Schaufelblattes 4 angeordnet. Sie hat einen nierenförmigen Öffnungsquerschnitt mit einer Öffnungsfläche, die größer ist als die Öffnungsfläche der vorderen Vertiefung 22. In etwa entspricht ihre Öffnungsfläche der Grundfläche der saugseitigen Erhebung 20. Sie ist mit ihrer Längsachse 42 in etwa in Richtung der Hauptströmung ausgerichtet und hat einen vorderen Bereich 46a, einen mittleren Bereich 46b und einen hinteren Bereich 46c. Sie berührt mit einem öffnungsseitigen Abschnitt einer konkaven Seitenflanke 44c des mittleren Bereichs 46b die saugseitige Schaufelblattwandung 10 und ist mit ihrem vorderen Bereich 46b und mit ihrem hinteren Bereich 46c von dieser beabstandet. Ihr tiefster Abschnitt 30b ist in dem vorderen Bereich 46a positioniert. Sie hat eine steil abfallende Stirnflanke 44a und eine flach ansteigende hintere Flanke 44b, zwischen denen sich der mittlere Vertiefungsbereich 46b mit einer in etwa konstante Tiefe erstreckt. Ihre Seitenflanken 44c, 44d haben bis auf die konkave bzw. konvexe Krümmung einen in etwa ähnlichen Verlauf, so dass die hintere Vertiefung 24 eine in etwa konstante Breite aufweist.

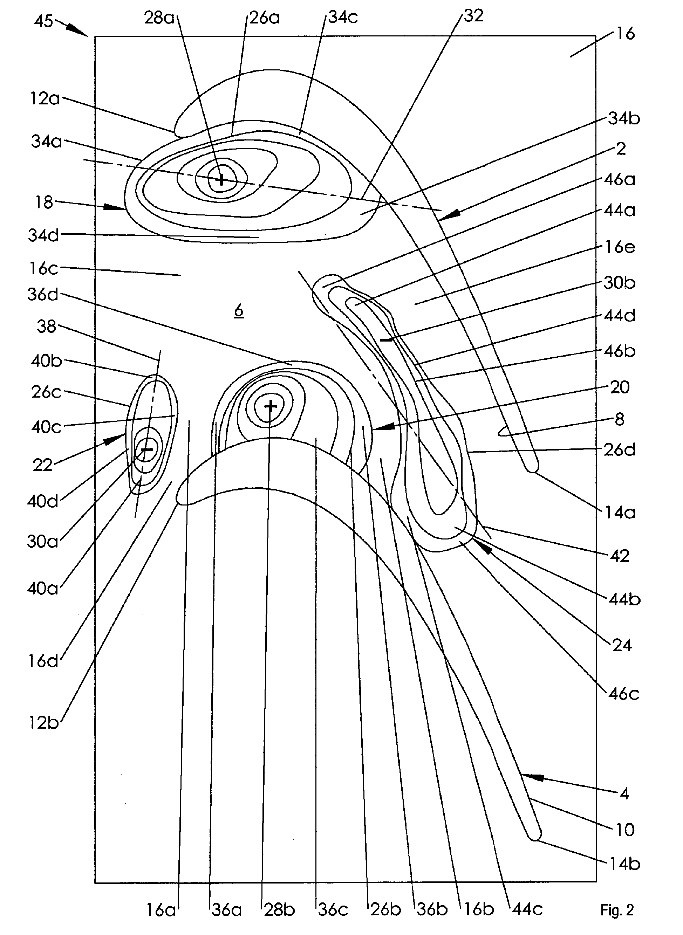

Figur 2 zeigt eine Draufsicht auf eine Schnittdarstellung eines in einer Ebene abgewickelten Umfangsabschnittes eines zweiten erfindungsgemäßen niederdruckseitigen Schaufelgitters 45 einer axialen Strömungsmaschine wie eine stationäre Gasturbine oder ein Flugzeugtriebwerk.

Das Schaufelgitter 45 hat entsprechend dem ersten Schaufelgitter 1 eine Vielzahl von in Umfangsrichtung nebeneinander angeordneten Schaufelblättern 2, 4, deren gegenüberliegenden sich jeweils zwischen einer Vorderkante 12a, 12b und einer Hinterkante 14a, 14b erstreckenden Schaufelblattwandungen 8, 10 mit einer radialen inneren Begrenzungswand 16 und einer nicht gezeigten radialen äußeren Begrenzungswand jeweils einen Schaufelkanal 6 bilden, in dem eine Hauptströmung ausgebildet wird.

Zumindest die innere Begrenzungswand 16 des Schaufelkanals 6 ist vorzugsweise mit einer nicht axial-symmetrischen Seitenwandkonturierung in Form einer druckseitigen Erhebung 18, einer saugseitigen Erhebung 20 sowie einer saugseitigen in Strömungsrichtung betrachtet vorderen Vertiefung 22 und einer stromabwärts der saugseitigen Erhebung 20 angeordneten saugseitigen hinteren Vertiefung 24 versehen. Die Einzelkonturierungen 18, 20, 22, 24 können jedoch auch nur im Bereich der gehäuseseitigen äußeren Begrenzungswand oder im Bereich von beiden Begrenzungswänden vorgesehen sein. Sie sind zeichnerisch durch eine Vielzahl von Höhen- bzw. Tiefenlinien 26a bis 26d mit jeweils einem Pluszeichen als höchsten Abschnitt 28a, 28b oder einem Minuszeichen als tiefsten Abschnitt 30a, 30b dargestellt. Die Abschnitte 28a, 28b und 30a, 30b können dabei einheitliche Höhen und Tiefen oder unterschiedliche Höhen und Tiefen haben. Die Einzelkonturierungen 18, 20, 22, 24 weisen unterschiedliche Geometrien auf und sind vor einem saugseitigen nicht bezifferten Transitionspunkt angeordnet. Sie sind jeweils voneinander beabstandet, so dass zwischen den saugseitigen Einzelkonturierungen 20, 22, 24 sowie zwischen den saugseitigen Einzelkonturierungen 20, 22, 24 und der druckseitigen Einzelkonturierung 18 jeweils ein dem ursprünglichen Verlauf der Begrenzungswand 16 verlaufender Flächenabschnitt 16a, 16b, 16c geschaffen ist.

Die druckseitige Erhebung 18 hat einen in etwa ovalen Grundquerschnitt und ist mit ihrer Längsachse 32 in etwa in Richtung der Hauptströmung orientiert. Sie erstreckt sich stromaufwärts betrachtet über die Vorderkante 12a des ersten Schaufelblattes 2 hinaus und berührt mit einem fußseitigen Abschnitt einer Seitenflanke 34c die druckseitige Schaufelblattwandung 8. Sie ist mit ihrem höchsten Abschnitt 28a von der Schaufelblattwandung 8 beabstandet, so dass zwischen der Schaufelblattwandung 8 und der Seitenflanke 34c ein nicht bezifferter Strömungskanalabschnitt gebildet ist. Der höchste Abschnitt 28a ist mittig der Erhebung 18 angeordnet und etwas in Richtung der Vorderkante 12a versetzt, wodurch die Seitenflanke 34c steiler ansteigt als ihre entgegengesetzte Seitenflanke 34d. Ihre ansteigende Stirnflanke 34a und ihre abfallende hintere Flanke 34b sind nahezu gleich ausgebildet.

Die saugseitige Erhebung 20 ist im Bereich der zweiten Schaufel 4 gegenüber der druckseitigen Erhebung 18 angeordnet, so dass im Bereich der inneren Begrenzungswand 16 zwischen den Erhebungen 18, 20 ein nicht bezifferter querschnittsverjüngter Schaufelkanalabschnitt geschaffen ist. Sie hat im Vergleich zur druckseitigen Erhebung 18 einen kreisförmigen Grundquerschnitt mit einem von der Schaufelblattwandung 10 beabstandeten und stromaufwärts versetzten höchsten Abschnitt 28b. Ihre Grundfläche ist kleiner als die Grundfläche der druckseitigen Erhebung 18. Sie hat eine in etwa kegelförmige Geometrie mit einem steil ansteigenden stirnseitigen Umfangsflankenabschnitt 36a und einem flach abfallenden hinteren Umfangsflankenabschnitt 36b. Sie berührt mit einem fußseitigen Umfangsflankenabschnitt 36c die saugseitige Schaufelblattwandung 10 derart, dass dieser entsprechend der Schaufelblattwandung 10 konvex ausgebildet ist, wobei zwischen dem Umfangsflankenabschnitt 36c und der Schaufelblattwandung 10 ein nicht bezifferter Strömungskanalabschnitt gebildet ist. Ein von der Seitenwandung 10 abgewandter und sich zwischen dem stirnseitigen Umfangsflankenabschnitt 36a und dem hinteren Umfangsflankenabschnitt 36b erstreckender Umfangsflankenabschnitt 36d ist entsprechend diesen Umfangsflankenabschnitten 36a, 36b konkav ausgebildet.

Die vordere Vertiefung 22 ist stromaufwärts der saugseitigen Erhebung 20 und stromaufwärts der Vorderkante 12b des zweiten Schaufelblattes 4 in die innere Begrenzungswand 16 eingebracht. Somit ist die vordere Vertiefung 22 von dem Schaufelblatt 4 über einen Flächenabschnitt 16d der inneren Begrenzungswand 16 beabstandet. Sie hat einen ovalen Öffnungsquerschnitt mit einer Öffnungsfläche, die kleiner als die jeweilige Grundfläche der Erhebungen 18, 20 und einer Öffnungsfläche der hinteren Vertiefung 24 ist. Sie ist mit ihrer Längsache 38 im Wesentlichen in Richtung der Hauptströmung orientiert. Ihr tiefster Abschnitt 30a ist in einem mittleren Vertiefungsbereich angeordnet und etwas in Richtung des Schaufelblattes 4 versetzt, wodurch ihre schaufelblattnahe Stirnflanke 40a steiler als ihre schaufelblattferne hintere Flanke 40b ausgebildet ist. Ihre Seitenflanken 40c, 40d sind nahezu identisch, so dass die Vertiefung 22 quasi spiegelsymmetrisch zu ihrer Längsachse 38 ausgeführt ist.

Die hintere Vertiefung 24 ist stromabwärts der saugseitigen Erhebung 20 im Bereich des zweiten Schaufelblattes 4 angeordnet. Sie hat einen birnenförmigen Öffnungsquerschnitt mit einer Öffnungsfläche, die größer ist als die Öffnungsfläche der vorderen Vertiefung 22 und die etwa der Grundfläche der druckseitigen Erhebung 18 entspricht. Sie ist mit ihrer Längsachse 42 in etwa in Richtung der Hauptströmung ausgerichtet und hat einen mittleren Vertiefungsbereich 46b, der stromaufwärts in einen querschnittsverjüngten vorderen Vertiefungsbereich 46a und stromabwärts in einen querschnittserweiterten hinteren Vertiefungsbereich 46c übergeht. Sie berührt mit einem öffnungsseitigen Abschnitt einer Seitenflanke 44c des hinteren Bereichs 46c die saugseitige Schaufelblattwandung 10 und erstreckt sich mit ihrem vorderen Bereich 46a, der den tiefsten Abschnitt 30b aufweist, zwischen die Erhebungen 18 und 20. Hierdurch weist der Flächenabschnitt 16b zwischen der hinteren Vertiefung 24 und der saugseitigen Erhebung 20 eine in etwa konstante Breite auf. Ebenso wird hierdurch zwischen der hinteren Vertiefung 24 und der druckseitigen Schaufelblattwandung 8 ein Flächenbereich 16e mit einer in etwa konstanten Breite geschaffen. Der mittlerer Vertiefungsbereich 46b hat eine in etwa konstante Tiefe. Ihre Seitenflanken 44c, 44d haben bis auf die konkave bzw. konvexe Krümmung einen in etwa ähnlichen Verlauf, so dass die hintere Vertiefung 24 eine in etwa konstante Breite aufweist. Ihre abfallende Stirnflanke 44a und ihre ansteigende hintere Flanke 44b entsprechen nahezu einander. Ebenso weisen ihre Seitenflanken 44c, 44d bis auf die konkave bzw. konvexe Krümmung einen in etwa ähnlichen Verlauf auf.

Offenbart ist ein Schaufelkanal mit einer nicht axial-symmetrischen Seitenwandkonturierung in einer Strömungsmaschine, wobei die Seitenwandkonturierung druckseitig zumindest eine Einzeleinzelkonturierung in Form einer Erhebung und saugseitig zumindest drei Einzeleinzelkonturierungen in Form von zwei Vertiefungen und einer Erhebung aufweist, die in Strömungsrichtung zwischen den Vertiefungen angeordnet ist, sowie eine Strömungsmaschine mit einer Vielzahl von derartigen Schaufelkanälen.

### Bezugszeichenliste

- 1: Schaufelgitter
- 2: Schaufelblatt
- 4: Schaufelblatt
- 6: Schaufelkanal
- 8: druckseitige Schaufelblattwandung
- 10: saugseite Schaufelblattwandung
- 12a, b: Vorderkante
- 14a, b: Hinterkante
- 16: innere Begrenzungswand
- 16a, b, c, d, e: Flächenabschnitt
- 18: druckseitige Erhebung
- 20: saugseitige Erhebung
- 22: vordere Vertiefung
- 24: hintere Vertiefung
- 26a, b, c, d: Linie
- 28a, b: höchster Abschnitt
- 30a, b: tiefster Abschnitt
- 32: Längsachse
- 34a,b,c,d: Flanke der druckseitige Erhebung
- 36a, b, c, d: Flanke der saugseitige Erhebung
- 38: Längsachse
- 40a, b, c, d: Flanke der vordere Vertiefung
- 42: Längsachse
- 44a, b, c, d: Flanke der hintere Vertiefung
- 45: Schaufelgitter
- 46a, b, c: Bereich der hinteren Vertiefung

## Patentansprüche

1. Schaufelkanal (6) mit einer Seitenwandkonturierung in einer Strömungsmaschine, der in Umfangsrichtung von einer druckseitigen Wandung (8) eines ersten Schaufelblattes (2) und von einer gegenüberliegenden saugseitigen Wandung (10) eines benachbarten zweiten Schaufelblattes (4) begrenzt ist, und der in Radialrichtung von zwei gegenüberliegenden Begrenzungswänden (16) begrenzt ist, wobei zumindest eine der Begrenzungswände (16) im Bereich der druckseitigen Schaufelblattwandung (8) mit zumindest einer druckseitigen Erhebung (18) versehen ist, dadurch gekennzeichet dass an der erhebungsseitigen Begrenzungswand (16) im Bereich der saugseitigen Schaufelblattwandung (10) zumindest zwei saugseitige Vertiefungen (22, 24) und zumindest eine saugseitige Erhebung (20) vorgesehen sind, wobei in Strömungsrichtung betrachtet die saugseitige Erhebung (20) zwischen den Vertiefungen (22, 24) angeordnet ist, und wobei die Erhebungen (18, 20) und die Vertiefungen (22, 24) lokal ausgebildet und voneinander beabstandet sind.

2. Schaufelkanal nach Anspruch 1, wobei die Erhebungen (18, 20) in Umfangsrichtung betrachtet gegenüberliegend angeordnet sind und zwischen ihnen ein querschnittsverjüngter Schaufelkanalabschnitt ist.

3. Schaufelkanal nach einem der Ansprüche 1 oder 2, wobei zumindest vereinzelt höchste Abschnitte (28a, 28b) bzw. tiefste Abschnitte (30a, 30b) der Erhebungen (18, 20) und der Vertiefungen (22, 24) von den Schaufelblattwandungen (8, 10) beabstandet sind.

4. Schaufelkanal nach einem der vorhergehenden Ansprüche, wobei die höchsten Abschnitte (28a, 28b) und tiefsten Abschnitten (30a, 30b) stromabwärts vor einem schaufelblattseitigen Transitionspunkt angeordnet sind.

5. Schaufelkanal nach einem der vorhergehenden Ansprüche, wobei die druckseitige Erhebung (18) die druckseitige Schaufelblattwandung (8) berührt und sich bis zur Vorderkante (12a) des ersten Schaufelblattes (2) erstreckt.

6. Schaufelkanal nach Anspruch 5, wobei die vordere Vertiefung (22) die saugseitige Schaufelblattwandung (10) berührt und sich stromaufwärts über eine Vorderkante (12b) des zweiten Schaufelblattes (4) hinaus erstreckt.

7. Schaufelkanal nach einem der Ansprüche 1 bis 4, wobei die druckseitige Erhebung (18) die druckseitige Schaufelblattwandung (8) berührt und sich stromaufwärts über die Vorderkante (12a) des ersten Schaufelblattes (2) hinaus erstreckt.

8. Schaufelkanal nach Anspruch 7, wobei die vordere Vertiefung (22) stromaufwärts vor der Vorderkante (12b) des zweiten Schaufelblattes (4) angeordnet ist.

9. Schaufelkanal nach Anspruch 7 oder 8, wobei sich die hintere Vertiefung (24) zwischen die Erhebungen (18, 20) erstreckt.

10. Schaufelkanal nach einem der vorhergehenden Ansprüche, wobei die saugseitige Erhebung (20) und die hintere Vertiefung (24) die saugseitige Schaufelblattwandung (10) berühren.

11. Strömungsmaschine mit zumindest einem Schaufelgitter (1, 45) mit einer Vielzahl von Schaufelkanälen (6) nach einem der vorhergehenden Ansprüche.

## Claims

1. Blade channel (6) having a side wall outline in a flow machine, which is restricted in the peripheral direction by a pressure-side wall (8) of a first blade (2) and by an opposing suction-side wall (10) of a adjacent second blade (4), and which is restricted in the radial direction by two opposing partition walls (16), wherein at least one of the partition walls (16) is provided in the region of the pressure-side blade wall (8) with at least one pressure-side elevation (18), **characterised in that** at least two suction-side recesses (22, 24) and at least one suction-side elevation (20) are provided on the elevation-side partition wall (16) in the region of the suction-side blade wall (10), wherein, considered in the flow direction, the suction-side elevation (20) is arranged between the recesses (22, 24), and wherein the elevations (18, 20) and the recesses (22, 24) are formed locally and are at a distance from one another.

2. Blade channel according to claim 1, wherein the elevations (18, 20), considered in the peripheral direction, are arranged opposite one another and a blade channel section, the cross-section of which is tapered, is between them.

3. Blade channel according to one of claims 1 or 2, wherein at least the isolated highest sections (28a, 28b) or lowest sections (30a, 30b) of the elevations (18, 20) and the recesses (22, 24) are at a distance from the blade walls (8, 10).

4. Blade channel according to one of the preceding claims, wherein the highest sections (28a, 28b) and lowest sections (30a, 30b) are arranged upstream before a blade-side transition point.

5. Blade channel according to one of the preceding claims, wherein the pressure-side elevation (18) touches the pressure-side blade wall (8) and extends to the front edge (12a) of the first blade (2).

6. Blade channel according to claim 5, wherein the front recess (22) touches the suction-side blade wall (10) and extends upstream over a front edge (12b) of the second blade (4).

7. Blade channel according to one of claims 1 to 4, wherein the pressure-side elevation (18) touches the pressure-side blade wall (8) and extends upstream over the front edge (12a) of the first blade (2).

8. Blade channel according to claim 7, wherein the front recess (22) is arranged upstream before the front edge (12b) of the second blade (4).

9. Blade channel according to claim 7 or 8, wherein the back recess (24) extends between the elevations (18, 20)

10. Blade channel according to one of the preceding claims, wherein the suction-side elevation (20) and the back recess (24) touch the suction-side blade wall (10).

11. Flow machine having at least one cascade (1, 45) with a plurality of blade channels (6) according to one of the preceding claims.

## Revendications

1. Canal d'aube (6) doté d'un profilage de la paroi latérale dans une turbomachine, lequel canal d'aube est délimité dans la direction périphérique par une paroi côté pression (8) d'un premier corps d'aube (2) et par une paroi côté aspiration (10) opposée d'un deuxième corps d'aube (4) adjacent, et lequel canal d'aube est délimité dans la direction radiale par deux parois de délimitation (16) opposées, au moins une des parois de délimitation (16) étant pourvue, dans la zone de la paroi de corps d'aube côté pression (8), d'au moins une partie surélevée côté pression (18), **caractérisé en ce qu'**au moins deux renfoncements côté aspiration (22, 24) et au moins une partie surélevée côté aspiration (20) sont prévus au niveau de la paroi de délimitation côté partie surélevée (16) dans la zone de la paroi de corps d'aube côté aspiration (10), la partie surélevée côté aspiration (20) étant disposée, vu dans le sens de l'écoulement, entre les renfoncements (22, 24), et les parties surélevées (18, 20) et les renfoncements (22, 24) étant réalisés localement de manière espacée les uns des autres.

2. Canal d'aube selon la revendication 1, les parties surélevées (18, 20) étant disposées, vu dans la direction périphérique, de manière à se faire face et une section de canal d'aube, qui présente une section transversale rétrécie, étant disposée entre lesdites parties surélevées.

3. Canal d'aube selon l'une quelconque des revendications 1 ou 2, des sections les plus hautes (28a, 28b) ou des sections les plus basses (30a, 30b) des parties surélevées (18, 20) et des renfoncements (22, 24) étant espacées au moins de manière isolée des parois de corps d'aube (8, 10).

4. Canal d'aube selon l'une quelconque des revendications précédentes, les sections les plus hautes (28a, 28b) et les sections les plus basses (30a, 30b) étant disposées en aval d'un point transition côté corps d'aube.

5. Canal d'aube selon l'une quelconque des revendications précédentes, la partie surélevée côté pression (18) touchant la paroi de corps d'aube côté pression (8) et s'étendant jusqu'à l'arête avant (12a) du premier corps d'aube (2).

6. Canal d'aube selon la revendication 5, le renfoncement avant (22) touchant la paroi de corps d'aube côté aspiration (10) et s'étendant en amont au-delà d'une arête avant (12b) du deuxième corps d'aube (4).

7. Canal d'aube selon l'une quelconque des revendications 1 à 4, la partie surélevée côté pression (18) touchant la paroi de corps d'aube côté pression (8) et s'étendant en amont au-delà de l'arête avant (12a) du premier corps d'aube (2).

8. Canal d'aube selon la revendication 7, le renfoncement avant (22) étant disposé en amont de l'arête avant (12b) du deuxième corps d'aube (4).

9. Canal d'aube selon la revendication 7 ou 8, le renfoncement arrière (24) s'étendant entre les parties surélevées (18, 20).

10. Canal d'aube selon l'une quelconque des revendications précédentes, la partie surélevée côté aspiration (20) et le renfoncement arrière (24) touchant la paroi de corps d'aube côté aspiration (10).

11. Turbomachine équipée d'au moins une grille d'aube (1, 45) dotée d'une pluralité de canaux d'aube (6) selon l'une quelconque des revendications précédentes.
